# FASCICULE DE BREVET EUROPEEN

(11) **EP 1 386 482 B1**
(45) Date de publication et mention de la délivrance du brevet: **08.08.2007**
(21) Numéro de dépôt: 02732857.4
(22) Date de dépôt: 07.05.2002
(51) Int. Cl.: H04N 5/44

(54) **PROCEDE DE SELECTION D'UNE IMAGE DE LOGICIEL EXECUTABLE**
VERFAHREN ZUR VERSIONSAUSWAHL VON AUSFÜHRBARER SOFTWARE
METHOD FOR SELECTING AN EXECUTABLE SOFTWARE IMAGE

(30) Priorité: 09.05.2001 FR 0106112
(43) Date de publication de la demande: 04.02.2004
(73) Titulaire: Thomson Licensing, 92100 Boulogne-Billancourt (FR)
(72) Inventeur: PROUST, Laurent, F-75011 Paris (FR); HAMERY, Dominique, F-92500 Rueil Malmaison (FR)
(74) Mandataire: Kohrs, Martin
(86) Numéro de dépôt international: PCT/FR2002/001567
(87) Numéro de publication internationale: WO 2002/091099

(56) Documents cités:
- EP-A- 0 700 205
- EP-A- 0 998 141
- WO-A-01/58146
- US-A- 5 951 639

## Description

### Domaine technique

L'invention concerne un procédé de sélection et lancement d'une image, c'est à dire de la copie d'un logiciel exécutable, par exemple pour traiter une réception d'une émission de télévision numérique. Elle se situe plus particulièrement dans le domaine des décodeurs de télévision numérique.

### Etat de la technique

Les décodeurs actuels de télévision numérique ont un logiciel résident, image d'un logiciel exécutable, qui est exécuté par exemple chaque fois que le décodeur est mis en route. Cette image permet le traitement d'émissions reçues par le décodeur de façon à transformer le signal numérique reçu en un signal vidéo au sens large, c'est à dire en un signal contenant une image, des sons, des signaux de synchronisation mais aussi éventuellement, du texte et d'une façon générale un ensemble d'informations pouvant être transformées en signaux sensibles pour un utilisateur d'une station terminale comprenant le décodeur. Le logiciel résident peut être stocké dans une mémoire du décodeur. Il peut aussi être chargé dans une telle mémoire à partir du flux d'informations reçu par le décodeur. L'exécution du logiciel résident ou chargé ou le chargement éventuel à partir d'un flux numérique reçu, est rendu possible par la présence d'un logiciel d'amorçage et d'un logiciel de chargement. Ces logiciels d'amorçage et de chargement comportent un jeu initial d'instructions renvoyant à une adresse de début du logiciel résident. Le logiciel de chargement amorcé par le logiciel d'amorçage vérifie la présence du logiciel résident et son intégrité. Il comporte des instructions permettant de charger si nécessaire, et lancer un logiciel exécutable à partir du flux numérique reçu par le décodeur dans le cas d'un retour d'information signalant qu'aucune image n'est présente dans l'un des moyens de stockage du décodeur. Si la présence d'une image intègre est vérifiée, ou après chargement éventuel à partir du flux numérique, le logiciel de chargement permet de charger un logiciel résident dans une zone de mémoire permettant son exécution puis de l'exécuter. Le logiciel résident est exécuté pour décoder les émissions reçues. L'ensemble du logiciel résident y compris les logiciels d'amorçage et de chargement sont logés dans une mémoire du décodeur. Les logiciels d'amorçage et de chargement sont stockés dans une partie de mémoire non effaçable ou de préférence protégée de façon logicielle en effacement. Le logiciel exécutable résident est logé dans une partie effaçable de la mémoire. En cas de chargement du logiciel résident à partir du flux numérique d'informations reçu par le décodeur, le logiciel reçu vient écraser le logiciel résident se trouvant éventuellement dans la zone de mémoire effaçable prévue pour stocker ledit logiciel. Le logiciel de chargement permet également de charger à partir du flux numérique une nouvelle image ou une mise à jour d'une image résidente.

**Le document** US-A-5 951 639 (MACINNIS ALEXANDER G) 14 septembre 1999 **(1999-09-14),** qui est consideré comme étant l'état de la technique le plus proche, décrit un procédé utilisable dans un décodeur de télévision numérique pour sélectionner et lancer une image d'un logiciel exécutable, le procédé comportant la mise en route d'un logiciel d'amorçage auto-exécutable pour lancer une image, dans lequel le logiciel d'amorçage et de chargement prévoit les étapes suivantes: la consultation d'une table référençant dans un ordre prédéterminé un nombre entier n supérieur à 1, d'images de logiciels exécutables; la sélection d'une image intègre de logiciel exécutable; et le lancement de l'image sélectionnée pour exécution.

### Brève description de l'invention

Dans l'état actuel de la technique il n'est prévu de stocker qu'une seule image de logiciel exécutable. Ce logiciel qu'il ait été préalablement chargé à partir du flux diffusé ou qu'il soit résident est exécuté à partir de la mémoire où il est chargé pour être exécuté.

Selon la présente invention, il est prévu de stocker plusieurs images de logiciels exécutables dans le décodeur. L'invention est donc relative à un procédé pour, à partir du logiciel d'amorçage et de chargement fourni avec le décodeur par le fabricant du décodeur,
- sélectionner l'une des images de logiciel exécutable parmi des images de logiciel stockées dans le décodeur sur une mémoire du décodeur,
- décompresser l'image du logiciel sélectionné si l'image du logiciel sélectionné est stockée sous une forme compressée,
- charger si nécessaire l'image du logiciel sélectionné à partir de la mémoire où elle est stockée, dans une mémoire permettant son exécution, par exemple de la charger dans une mémoire rapide si l'image du logiciel sélectionné se trouve initialement stockée dans un disque dur,
- enfin de lancer l'image du logiciel sélectionné.

Bien entendu le procédé selon l'invention permet toujours comme dans l'art antérieur de charger un exécutable à partir du flux, s'il n'y a pas d'image de logiciel exécutable disponible dans une mémoire du décodeur ou si l'image disponible n'est pas intègre ou encore s'il s'agit d'une version périmée qu'il est nécessaire de remplacer.

En résumé l'invention est relative à un procédé utilisable dans un appareil de réception de télévision numérique par exemple dans un décodeur numérique de réception de télévision pour sélectionner et lancer une image d'un logiciel exécutable, le procédé comportant la mise en route d'un logiciel d'amorçage auto-exécutable pour lancer une image, procédé caractérisé en ce que le logiciel d'amorçage et de chargement prévoit les étapes ci-après :
c) la consultation d'une table interne à l'appareil de réception, référençant dans un ordre prédéterminé un nombre entier n supérieur à 1, d'images de logiciels exécutables stockées sur différents moyens de stockage du décodeur
s) la sélection d'une image intègre de logiciel exécutable,
l) le lancement de l'image sélectionnée pour exécution.

De préférence avant l'étape c) il est prévu une étape v1) de vérification que la table des logiciels d'amorçage est présente et intègre.

En règle générale, préalablement à l'exécution du procédé selon l'invention on aura constitué la table de références contenant un nombre entier n de références, chaque référence de la table renvoyant de façon univoque à une des n images stockées dans une zone mémoire, le logiciel d'amorçage auto-exécutable renvoyant à ladite table de logiciels d'amorçage, puis selon une routine effectuée à chaque mise en route ou à chaque réinitialisation du décodeur :
v1) on vérifie que la table des logiciels d'amorçage est présente et intègre,
p) on parcourt la table selon un ordre prédéterminé de façon à atteindre les références de la table dans l'ordre de préférence des images stockées auxquelles chaque référence de la table correspond,
v2) on vérifie que l'image correspondant à la première référence de la table atteinte par le parcours de la table est intègre,
1) si l'image vérifiée à l'étape v2) est intègre on charge éventuellement ladite image et on lance l'exécution de cette image,
e) si l'image n'est pas intègre alors on sélectionne la référence courante de la table suivant dans l'ordre de parcours prédéterminé, la référence précédente, et on effectue les étapes v2), et éventuellement 1) si l'image courante est intègre, si elle ne l'est pas on recommence à nouveau l'étape e) pour la référence suivante dans l'ordre de parcours de la table, et ce jusqu'à ce qu'une image intègre soit trouvée.

De préférence les n images sont réparties en deux parties, une première partie composée d'un nombre entier d'images (n-m) logées dans des parties de mémoire effaçables et une seconde partie complémentaire de la première composée d'un nombre entier d'images m inférieur ou égal à n logée sur des parties de mémoire non effaçable ou protégées en effacement.

Dans ce cas, de préférence on exécute les étapes de sélection s) de référence, de vérification d'intégrité v2) tout d'abord pour les (n-m) images contenues dans les zones mémoire non protégées en effacement, puis si aucune de ces images n'est intègre, pour les m images contenues dans les zones mémoire non effaçables ou protégées en effacement.

De préférence les m images stockées sur des zones mémoire non effaçables ou protégées en effacement sont stockées sur des médias différents les uns des autres en sorte qu'il y a au maximum une image protégée en effacement sur chaque médium, par exemple une image sur un disque dur et une image sur une mémoire rapide.

Si la table n'est pas intègre ou si après parcours total de la table et vérification v2) tout d'abord des (n-m) images stockées en zone mémoire non protégée en effacement il s'avère qu'aucune de ces images n'est intègre alors on effectue ensuite à nouveau les étapes s) de sélection, v2) de vérification et éventuellement de chargement puis 1) de lancement, pour les m images stockées en zone protégées en effacement, ces m images étant parcourues dans un ordre prédéterminé correspondant à un ordre de préférence.

Dans l'étape préalable à l'exécution du procédé de constitution de la table de références on charge dans le décodeur un nombre entier n d'images en les répartissant de préférence en (n-m) images stockées dans des zones de mémoire non protégées en effacement et m images stockées dans des zones de mémoire protégées en effacement, à raison de une image par médium de stockage.

Selon un mode de réalisation les zones de mémoire protégées en effacement où sont stockées les m images sont des zones mémoire d'un disque dur.

Selon un mode de réalisation, préalablement au chargement de l'une des images pour exécution, il est vérifié que cette image n'est pas stockée sous un mode compressé, l'image étant décompressée avant d'être éventuellement chargée et exécutée s'il s'avère qu'elle est compressée.

### Brève description des dessins

Un mode de réalisation de l'invention sera maintenant explicité à l'aide des dessins annexés dans lesquels,
- la figure 1 est une vue schématique d'une mémoire rapide et de son contenu relatif au logiciel résident exécutable selon l'art antérieur,
- la figure 2 représente une mémoire rapide et une mémoire de stockage et leurs contenus respectifs selon un mode de réalisation de la présente invention,
- la figure 3 est une vue schématique des moyens de stockage d'information d'un décodeur incorporant l'invention.
- la figure 4 est un organigramme des étapes du procédé selon l'invention pour sélectionner puis charger éventuellement et lancer l'une des images de logiciel exécutable chargée dans l'un des moyens de stockage du décodeur.

### Description d'un mode de réalisation.

Un mode de réalisation de la présente invention sera maintenant décrit en référence aux dessins annexés.

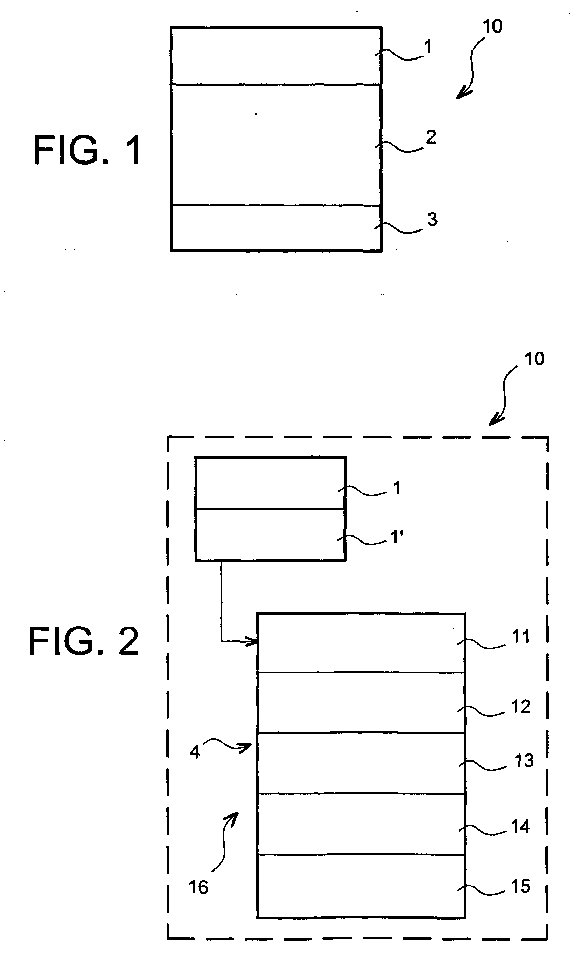

Tout d'abord en référence à la figure 1, l'état antérieur de l'art sera rappelé.

Dans une mémoire rapide 10 d'un décodeur, par exemple une mémoire de type "flash", telle que chargée selon l'art antérieur, une première partie 1 non effaçable ou protégée en effacement contient un logiciel d'amorçage et un logiciel de chargement. Ces logiciels d'amorçage et de chargement sont conçus et chargés par un fabricant d'un décodeur.

Une partie 2 de la mémoire contient d'autres informations qui n'intéressent pas la présente invention.

Une partie 3 effaçable ou non protégée en effacement de la mémoire 10 contient une image résidente d'un logiciel exécutable.

Le fonctionnement est le suivant. Le logiciel d'amorçage est auto-exécuté lorsque le décodeur passe d'un état éteint à un état veille ou allumé , ou encore en cas de réinitialisation. Ainsi par exemple à la mise en route du décodeur le logiciel d'amorçage délivre une instruction pour lancer le logiciel de chargement. Ce dernier vérifie la présence et l'intégrité de l'image de logiciel exécutable stockée dans la partie 3 de la mémoire du décodeur. Les moyens logiciels pour contrôler cette intégrité sont en eux-mêmes connus. I1 peut s'agir par exemple d'un contrôle de somme ou encore d'une vérification du code de redondance longitudinal (Longitudinal Redundancy Code LRC).

Si le résultat de la vérification indique qu'il y a bien une image de logiciel chargée en zone 3 et que cette image chargée en zone 3 est intègre, alors le logiciel d'amorçage lance l'exécution dudit logiciel exécutable stockée dans la zone 3 de la mémoire du décodeur. Si le résultat de la vérification indique qu'il n'y a pas de logiciel en zone 3 ou que le logiciel chargé en zone 3 n'est pas intègre, alors le logiciel d'amorçage et de chargement lance le chargement à partir du flux, d'une image d'un logiciel exécutable. L'image chargée à partir du flux vient alors écraser éventuellement l'image non intègre se trouvant dans la zone 3.

Par rapport à cet état de la technique, il est prévu selon un mode de réalisation de l'invention plusieurs images de logiciels exécutables stockées sur différents moyens de stockage du décodeur, par exemple une mémoire rapide, un disque dur ayant une partie non effaçable et une partie effaçable, ces exemples n'étant pas limitatifs. Chacune des images exécutables peut être amorcée (boot). Il en résulte que le logiciel d'amorçage renvoie à une table 16 de références représentée symboliquement figure 2. La table 16 contient autant de références que d'images de logiciels exécutables du décodeur. Sur la figure 2 on a représenté le cas où n = 5 et m = 2. Dans cet exemple, il y a 4 images de logiciels exécutables en plus de l'image unique tel que prévu dans l'art antérieur. Il peut y avoir par exemple une image dans une zone mémoire protégée en effacement d'un disque dur, une image dans une zone protégée en effacement d'une mémoire rapide et trois images dans des zones non protégées en effacement du disque dur ou d'une mémoire rapide. Les références ou adresses respectives de renvoi vers la première instruction de chacune de ces images sont stockées dans des zones 11, 12, 13, 14 et 15 faisant partie d'une zone 4 de la mémoire par exemple rapide 10. Ainsi par exemple les zones 11-13 peuvent renvoyer à des adresses sur des zones mémoire de disque dur non protégée en effacement, et les zones 14 et 15 vers des adresses de zones mémoire non effaçable ou protégées en effacement d'un disque dur ou d'une mémoire rapide respectivement. D'un point de vue désignation la référence 4 désigne le support matériel de la table 16. La référence 16 désigne le contenu informationnel dans la zone mémoire 4. Comme dans l'art antérieur la zone 1 de la mémoire rapide 10 contient le logiciel d'amorçage et le logiciel de chargement fourni habituellement avec le décodeur. Conformément à la présente invention la mémoire rapide 10 a une zone mémoire 1' contenant un logiciel de sélection et de chargement d'image permettant la réalisation du procédé selon l'invention.

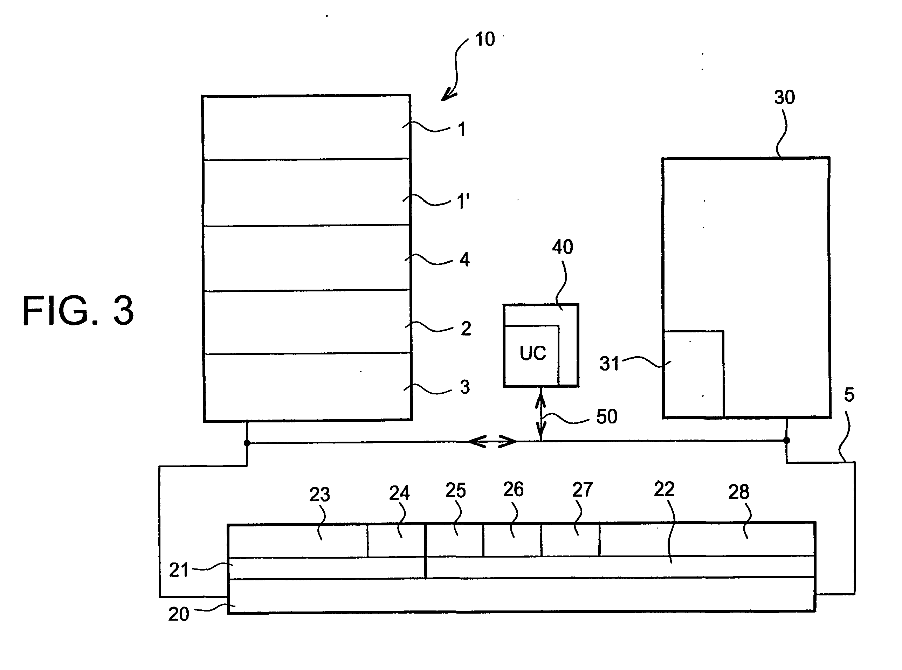

Un exemple d'un système matériel destiné à constituer le support matériel de l'invention est représenté figure 3.

Une mémoire rapide (flash) 10, une mémoire à accès aléatoire 30, et un disque dur 20 appartenant à un décodeur ou connectés localement à ce décodeur en sorte qu'on peut considérer que ces moyens sont internes au décodeur, sont reliés entre eux et à une unité centrale 40 par l'intermédiaire d'un bus 50. Le disque dur 20 a une zone 21 protégée en effacement et une zone 22 non protégée en effacement. La zone 22 non protégée en effacement loge une première, une seconde, une troisième image de logiciel exécutable dans des zones 25, 26, 27 respectivement de la zone 22. Une zone 28 non utilisée pour la présente invention contient d'autres données ou une partie vide. La zone 21 protégée en effacement a une zone 23 contenant une quatrième image d'un logiciel exécutable. Une zone 24 de la zone 21 non utilisée pour la présente invention contient d'autres données ou une partie vide. Lorsque l'une des quatre images de logiciel stockées a été sélectionnée par le logiciel de chargement et lancement stocké en zone 1' cette image est chargée si elle n'est pas exécutable directement à partir de son support, par exemple, dans une partie 31 de la mémoire à accès aléatoire 30.

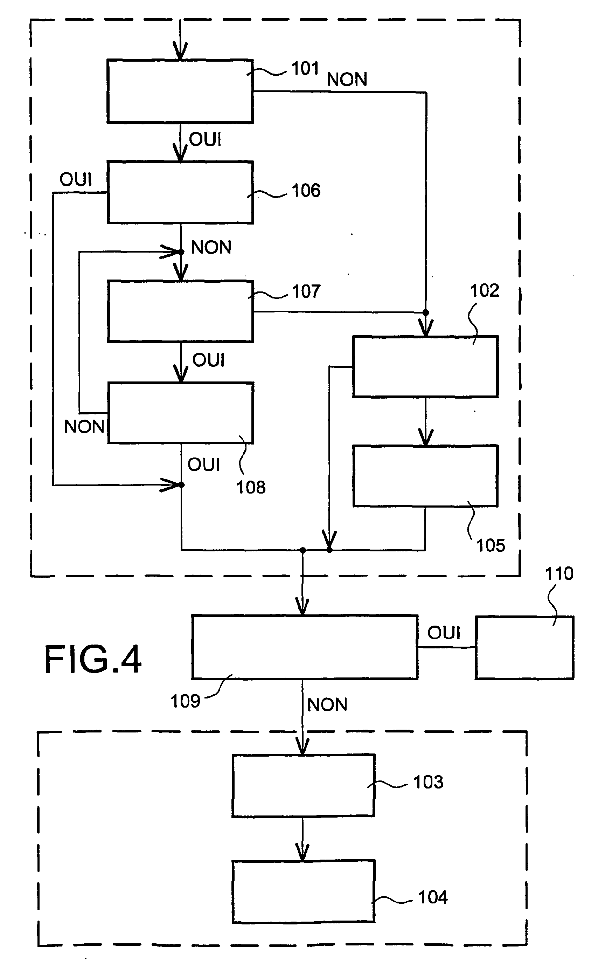

Le logiciel de sélection et de chargement d'image stocké en zone 1' sera maintenant décrit en référence à la figure 4.

Il est tout d'abord rappelé que le logiciel exécutable de sélection et de chargement est appelé par le logiciel d'amorçage stocké en zone 1, pour être chargé si cela est nécessaire pour l'exécution, par exemple dans une mémoire RAM, et exécuté. Dans le cas décrit en relation avec la figure 2 où la zone 1 est une zone d'une mémoire rapide, le logiciel de chargement et de sélection peut être exécuté directement à partir de son support.

Ce logiciel d'amorçage est conçu et chargé dans le décodeur par un fabricant du décodeur. La nécessité de s'adapter aux décodeurs tels qu'ils existent actuellement conduit à adopter l'architecture logicielle décrite dans laquelle il est renvoyé au logiciel chargé dans la zone 1'. Il est clair qu'avec des décodeurs conçus pour être adaptés à l'invention l'architecture logicielle pourra être différente, l'essentiel étant que les fonctions qui vont être décrites soient prévues.

Le procédé selon l'invention est initié après que le logiciel d'amorçage livré avec le décodeur ait appelé le logiciel contenu en zone 1' de sélection et éventuellement de chargement d'exécutable selon la présente invention. Ainsi, selon une première modification par rapport à l'art antérieur, l'adresse d'instruction spécifiée par le logiciel d'amorçage pour vérifier la présence et l'intégrité du logiciel résident ne correspond plus à cette première instruction mais à une instruction de renvoi au logiciel selon l'invention.

Selon une première étape v1) représentée en 101, il est vérifié que la table 16 est intègre et contient au moins une adresse pour une image de logiciel exécutable et qu'il s'agit d'une adresse fiable.

Si ce n'est pas le cas on passe à l'étape 102 où il est vérifié que l'image de logiciel exécutable stockée dans la zone 23 protégée en effacement du disque dur 20 est présente et intègre.

Si la vérification opérée à l'étape 102 révèle que l'image de logiciel exécutable stockée dans la zone 23 protégée en effacement du disque dur 20 est présente et intègre, alors cette image est éventuellement chargée à une étape 103 par exemple dans la mémoire à accès aléatoire 30, en zone 31 pour être lancée en exécution à une étape 104.

Si la vérification opérée à l'étape 102 révèle que l'image de logiciel exécutable stockée dans la zone 23 protégée en effacement du disque dur 20 n'est pas présente ou n'est pas intègre, alors on passe à l'étape 105 où il est vérifié que l'image de logiciel exécutable stockée dans la zone 3 protégée en effacement de la mémoire rapide 10, est présente et intègre. En cas de vérification positive les étapes 103 et 104 sont exécutées.

De façon générale si la table 16 n'est pas intègre ou si aucune des images désignées par la table n'est intègre on parcourt dans un ordre prédéterminé les m images stockées dans les zones protégées en effacement pour sélectionner et charger la première de ces images qui est trouvée intègre.

Si la vérification v1 effectuée à l'étape 101 est positive, c'est à dire si la table 16 est intègre et contient une première adresse pour une image d'un logiciel exécutable on passe à l'étape v2 106 où il est vérifié que la première image de logiciel exécutable stockée en zone 25 non protégée en effacement du disque dur 20, est présente et intègre. Si cette vérification est positive on passe aux étapes 103 puis 104.

Si la vérification effectuée à l'étape 106 est négative, l'image suivante de la table 16 est sélectionnée à une étape 107. La même vérification qu'à l'étape 106 est effectuée à l'étape 108 pour la deuxième image de logiciel exécutable stockée en zone 26 non protégée en effacement du disque dur 20. Si cette vérification est positive on passe aux étapes 103 puis 104.

Si la vérification effectuée à l'étape 108 est négative on revient à l'étape 107 où la même vérification est faite pour la troisième image de logiciel exécutable stockée en zone 27 non protégée en effacement du disque dur 20. On recommence les étapes 107 et 108 pour chacune des images jusqu'à trouver une image intègre. Après une vérification positive à l'étape 108, on passe aux étapes 103 puis 104 de façon à ce que la troisième image ou de façon générale, la première image trouvée intègre dans un ordre de parcours prédéterminé de la table 16 soit exécutée.

De façon générale si la table 16 est intègre alors on parcours la table pour sélectionner la première image intègre désignée par la table.

Le procédé qui vient d'être décrit permet de sélectionner, et éventuellement charger si nécessaire, puis lancer, parmi les images de logiciels exécutables disponibles au niveau du décodeur, l'image préférée tout d'abord parmi les images stockées dans des zones 25-27 non protégées en effacement du disque dur 20 puis parmi celles situées dans des zones 23, 3 protégées en effacement du disque dur 20 ou de la mémoire rapide 10 respectivement. Dans l'exemple commenté en relation avec les figures 2-4, les images préférées sont dans l'ordre de préférence décroissant, les première deuxième troisième image et éventuellement d'autres si elles existent selon un ordre de préférence prédéterminé stockées en zones non protégées en effacement du disque dur 20 puis les images stockées en zones protégées en effacement du disque dur 20 puis de la mémoire rapide 10 respectivement.

Si aucune image de logiciel exécutable n'est intègre alors comme dans l'art antérieur il y a selon une boucle non représentée figure 4 retour au logiciel d'amorçage, qui de façon connue lance le chargement d'un logiciel exécutable à partir du flux numérique reçu par le décodeur.

De façon optionnelle s'il est prévu de stocker ou de charger à partir du flux des images sous une forme compressée alors avant l'étape 103 de chargement de l'image sélectionnée en RAM, il est prévu une étape 109 de vérification de l'état de compression de l'image sélectionnée. Si l'image n'est pas compressée alors on passe directement à l'étape 103. Si l'image est compressée par exemple au moyen d'un code ZIP alors on passe à l'étape 103 par l'intermédiaire d'une étape 110 de décompression. Un tableau annexé à la présente description donne le texte figurant dans chacune des cases de l'organigramme représenté figure 4.

### ANNEXE

| 101 | 102 |
|---|---|
| Y a-il une adresse d'image de logiciel exécutable dans la table de logiciel d'amorçage ou la table de logiciel d'amorçage est-elle intègre? | L'image de logiciel en zone protégées du disque dur est-elle intègre? |

| 103 | 104 |
|---|---|
| Charger éventuellement l'image de logiciel exécutable sélectionné en mémoire RAM | Lancer l'image de logiciel exécutable sélectionné |

| 105 | 106 |
|---|---|
| L'image de logiciel exécutable en zone protégée de la mémoire rapide est-elle intègre? | La première image de logiciel intègre du disque dur est-elle intègre? |

| 107 | 108 |
|---|---|
| Sélectionner l'image suivante de la table | L'image de logiciel exécutable suivante est-elle intègre? |

| 109 | 110 |
|---|---|
| L'image sélectionnée est-elle compressée? | Décompresser l'image sélectionnée |

## Revendications

1. Procédé utilisé dans un décodeur de télévision numérique pour sélectionner et lancer une image d'un logiciel exécutable, le procédé comportant la mise en route d'un logiciel d'amorçage auto exécutable stocké dans le décodeur pour lancer une image, procédé **caractérisé en ce que** le logiciel d'amorçage et de chargement prévoit les étapes ci-après:
c) la consultation d'une table (16) stockée de façon interne au décodeur, référençant dans un ordre prédéterminé un nombre entier n supérieur à 1, d'images de logiciels exécutables stockées sur différents moyens de stockage du décodeur,
s) la sélection d'une image intègre de logiciel exécutable,
l) le lancement de l'image sélectionnée pour exécution.

2. Procédé selon la revendication 1, **caractérisé en ce qu'**avant l'étape c) il est prévu une étape :
v1) vérification (101) que la table (16) des logiciels d'amorçage est présente et intègre.

3. Procédé selon l'une des revendications 1 ou 2, **caractérisé en ce que** les étapes c) de consultation et s) de sélection comportent :
p) le parcours (106-108) de la table (16) selon l'ordre prédéterminé de façon à atteindre les références de la table dans un ordre de préférence des images de logiciels exécutables auxquels chaque référence correspond,
v2) la vérification (106) qu'une première image sélectionnée correspondant à la première référence de la table (16) atteinte par le parcours de ladite table, est intègre, la sélection de ladite première image n'intervenant que si la vérification (106) d'intégrité de ladite première image est positive.
e) si la première image ou une image vérifiée précédente n'est pas intègre passage à la référence de la table (16) suivant dans l'ordre de parcours prédéterminé la référence précédente, et exécution des étapes s) (107), et éventuellement l) (108) si l'image vérifiée courante est intègre, si elle ne l'est pas reprise à nouveau de l'étape e) pour la référence suivante dans l'ordre de parcours de la table (16), et ce jusqu'à ce qu'une image intègre soit trouvée, et lancée.

4. Procédé selon la revendication 2, **caractérisé en ce que** les n images sont réparties en deux parties, une première partie (n-m) logées dans des parties (25-27) de mémoires effaçables et une seconde partie complémentaire de la première composée d'un nombre entier d'images m inférieur ou égal à n logée sur des parties de mémoire (3, 23) non effaçable ou protégées en effacement.

5. Procédé selon la revendication 3, **caractérisé en ce que** les n images sont réparties en deux parties, une première partie (n-m) logées dans des parties (25-27) de mémoire effaçables et une seconde partie complémentaire de la première composée d'un nombre entier m dl images inférieur ou égal à n logée sur des parties de mémoire (3, 23) non effaçable ou protégées en effacement.

6. Procédé selon l'une des revendications 4 ou 5, **caractérisé en ce que** les références de la table (16) correspondant aux (n-m) images contenues dans les zones mémoire (25-27) non protégées en effacement sont parcourues en premier, puis si aucune de ces images n'est sélectionnée, le parcours se poursuit pour les m images contenues dans les zones mémoire (3, 23) non effaçables ou protégées en effacement.

7. Procédé selon la revendication 4, **caractérisé en ce que** lorsque la vérification effectuée à l'étape v1) montre que la table (16) n'est pas intègre on exécute les étapes s), v2) et éventuellement l) pour les m images contenues dans les zones mémoire (3, 23) non effaçables ou protégées en effacement.

8. Procédé selon l'une des revendications 4 à 7, **caractérisé en ce que** les m images stockées sur des zones mémoire (3, 23) non effaçables ou protégées en effacement sont stockées sur des médias (la, 20) différents les uns des autres.

9. Procédé selon l'une des revendications 4 à 8, **caractérisé en ce que** les zones (25-27) de mémoire non protégées en effacement où sont stockées les (n-m) images appartenant à la première partie sont des zones mémoire sur disque dur (20).

10. Procédé selon l'une des revendications 4 à 9, **caractérisé en ce que** les zones de mémoire (23, 3) protégées en effacement où sont stockées les m images appartenant à la seconde partie sont des zones mémoire (23, 3) de disque dur (20) ou de mémoire rapide (10).

11. Procédé selon l'une des revendications 1 à 10, **caractérisé en ce que** préalablement au lancement de l'une des images pour exécution, il est vérifié (109) que cette image n'est pas stockée sous un mode compressé, l'image étant décompressée (110) avant d'être chargée et exécutée (103, 104) s'il s'avère qu'elle est compressée.

12. Procédé selon l'une des revendications 4 à 7, **caractérisé en ce que** dans une étape préalable à l'exécution du procédé on charge un nombre entier n d'images que l'on répartit en une première partie contenant (n-m) images stockées dans des zones de mémoire (25-27) non protégées en effacement et en une seconde partie contenant m images stockées dans des zones de mémoire (3, 23) protégées en effacement, et **en ce que** l'on constitue la table (16) de référence pour les n images.

13. Décodeur ou récepteur de télévision numérique implémentant le procédé selon l'une des revendications précédentes.

## Claims

1. Method used in a digital television decoder for selecting and starting an executable software image, the method comprising the starting of a self executable bootstrapping software stored in the decoder for starting an image, method **characterized in that** the bootstrapping software provides for the following steps:
c) consulting a table (16) stored internally in the decoder, referencing in a predetermined order an integer n greater than 1, of executable software images stored on different storage means of the decoder,
s) selecting an uncorrupted image of the executable software
1) starting the selected image for execution.

2. Method according to claim 1, **characterised in that** before the step c), a step is provided:
v1) verification (101) that the bootstrapping software table (16) is present and uncorrupted.

3. Method according to one of claims 1 or 2, **characterised in that** the consultation c) and selection s) steps comprise:
p) running through (106-108) the table (16) according to the predetermined order so as to reach the references of the table in a priority order of the executable software images to which each reference corresponds,
v2) verification (106) that a first image selected corresponding to the first reference of the table (16) reached by running through the said table, is uncorrupted, the selection of the said first image only occurring if the verification (106) of integrity of the said first image is positive,
e) if the first image or an image verified previously is corrupted, one passes to the reference of the table (16) following the previous reference in the predetermined running order, and executes the steps s) (107), and possibly 1) (108) if the current verified image is uncorrupted, if it is corrupted repetition of the step e) for the next reference in the running order of the table (16) until an uncorrupted image is found, and started.

4. Method according to claim 2, **characterised in that** the n images are distributed into two parts, a first part (n-m) stored in parts (25-27) of erasable memories and a second part complementary to the first composed of an integer of images m less than or equal to n stored on parts of non-erasable or erasure-protected memory (3, 23).

5. Method according to claim 3, **characterised in that** the n images are distributed into two parts, a first part (n-m) hosted in parts (25-27) of erasable memories and a second part complementary to the first composed of an integer of images m less than or equal to n stored on parts of non-erasable or erasure-protected memory (3, 23).

6. Method according to one of claims 4 or 5, **characterised in that** the references of the table (16) corresponding to the (n-m) images contained in the non-erasure-protected memory zones (25-27) are run through first, then if none of these images is selected, the running through continues for the m images contained in the non-erasable or erasure-protected memory zones (3, 23).

7. Method according to claim 4, **characterised in that** when the verification v1) shows that the table (16) is not integral, one executes the steps s), v2) and possibly 1) for the m images contained in the non-erasable or erasure-protected memory zones (3, 23).

8. Method according to one of claims 4 to 7, **characterised in that** the m images stored on the non-erasable or erasure-protected memory zones (3, 23) are stored on medias (1a, 20) different from each other.

9. Method according to one of claims 4 to 8, **characterised in that** the non-erasure-protected memory zones (25-27) which store the (n-m) images belonging to the first part are memory zones on the hard disk (20).

10. Method according to one of claims 4 to 9, **characterised in that** the erasure-protected memory zones (23, 3) which store the m images belonging to the second part are memory zones (23, 3) on the hard disk (20) or rapid memory (10).

11. Method according to one of claims 1 to 10, **characterised in that** prior to starting one of the images for execution, it is checked (109) that this image is not stored in a compressed mode, the image being decompressed (110) before being loaded and executed (103, 104) if it proves to be compressed.

12. Method according to one of claims 4 to 7, **characterised in that** in a step prior to the execution of the method an integer n of images is loaded such that one distributes into a first part containing (n-m) images stored in non-erasure-protected memory zones (25-27) and into a second part containing m images stored in erasure-protected memory zones (3, 23), and **in that** a reference table (16) is constituted for the n images.

13. Decoder or digital television receiver implementing the method according to one of the aforementioned claims.

## Patentansprüche

1. Verfahren, das in einem digitalen Fernsehdecoder verwendet wird, um ein Abbild einer ausführbaren Software auszuwählen und zu starten, wobei das Verfahren das Starten einer selbst ausführenden Boot-Software, die in dem Decoder zum Starten eines Abbilds gespeichert ist, umfasst, **dadurch gekennzeichnet, dass** die Boot- und Ladesoftware die folgenden Schritte vorsieht:
c) Nachschlagen in einer Tabelle (16), die decoderintern gespeichert ist und in einer vorbestimmten Reihenfolge eine ganze Zahl n > 1 von in unterschiedlichen Speichermitteln des Decoders gespeicherten Abbildern von ausführbaren Softwares referenziert,
s) Auswählen eines integren Abbilds einer ausführbaren Software,
1) Starten des ausgewählten Abbilds zwecks Ausführung.

2. Verfahren nach Anspruch 1, **dadurch gekennzeichnet, dass** vor dem Schritt c) ein Schritt
v1) Verifizieren (101), dass die Tabelle (16) der Boot-Softwares vorhanden und integer ist, vorgesehen ist.

3. Verfahren nach einem der Ansprüche 1 oder 2, **dadurch gekennzeichnet, dass** die Schritte c) des Nachschlagens und s) des Auswählens Folgendes umfassen:
p) Durchlaufen (106-108) der Tabelle (16) in der vorbestimmten Reihenfolge, so dass die Referenzen der Tabelle in einer bevorzugten Reihenfolge der Abbilder von ausführbaren Softwares, denen jede Referenz zugeordnet ist, erreicht werden,
v2) Verifizieren (106), dass ein erstes ausgewähltes Abbild, das der ersten, beim Tabellendurchlauf erreichten Referenz der Tabelle (16) zugeordnet ist, integer ist, wobei das Auswählen des ersten Abbilds erst erfolgt, wenn das Verifizieren (106) der Integrität des ersten Abbilds positiv ist,
e) wenn das erste Abbild oder ein vorhergehendes verifiziertes Abbild nicht integer ist, Übergang zu der Referenz der Tabelle (16), die in der vorbestimmten Reihenfolge des Durchlaufs auf die vorhergehende Referenz folgt, und Durchführung der Schritte s) (107) und eventuell 1) (108), wenn das aktuelle verifizierte Abbild integer ist, wenn nicht, Wiederaufnahme von Schritt e) für die folgende Referenz in der Reihenfolge des Durchlaufs der Tabelle (16), bis ein integres Abbild gefunden und gestartet wird.

4. Verfahren nach Anspruch 2, **dadurch gekennzeichnet, dass**
die n Abbilder in zwei Teile eingeteilt sind - ein erstes Teil (n-m), das in löschbare Speicherteile (25-27) aufgenommen ist, und ein zweites Teil, das komplementär zu dem ersten Teil ist und das aus einer ganzzahligen Anzahl von Abbildern m besteht, die kleiner als oder gleich n ist, und in nicht löschbare oder löschgeschützte Speicherteile (3, 23) aufgenommen ist.

5. Verfahren nach Anspruch 3, **dadurch gekennzeichnet, dass** die n Abbilder in zwei Teile eingeteilt sind - ein erstes Teil (n-m), das in löschbare Speicherteile (25-27) aufgenommen ist, und ein zweites Teil, das komplementär zu dem ersten Teil ist und das aus einer ganzzahligen Anzahl m von Abbildern besteht, die kleiner als oder gleich n ist, und in nicht löschbare oder löschgeschützte Speicherteile (3, 23) aufgenommen ist.

6. Verfahren nach einem der Ansprüche 4 oder 5, **dadurch gekennzeichnet, dass** die Referenzen der Tabelle (16), die den (n-m) Abbildern zugeordnet sind, die in den nicht löschgeschützten Speicherbereichen (25-27) enthalten sind, zuerst durchlaufen werden, und anschließend, wenn keines dieser Abbilder ausgewählt wird, der Durchlauf sich für die in den nicht löschbaren oder löschgeschützten Speicherbereichen (3, 23) enthaltenen m Abbilder fortsetzt.

7. Verfahren nach Anspruch 4, **dadurch gekennzeichnet, dass**, wenn die in Schritt v1) durchgeführte Verifizierung zeigt, dass die Tabelle (16) nicht integer ist, die Schritte s), v2) und eventuell 1) für die in den nicht löschbaren oder löschgeschützten Speicherbereichen (3, 23) enthaltenen m Abbilder durchgeführt werden.

8. Verfahren nach einem der Ansprüche 4 bis 7, **dadurch gekennzeichnet, dass** die in nicht löschbaren oder löschgeschützten Speicherbereichen (3, 23) gespeicherten m Abbilder auf Trägern (Ia, 20) gespeichert sind, die sich voneinander unterscheiden.

9. Verfahren nach einem der Ansprüche 4 bis 8, **dadurch gekennzeichnet, dass** es sich bei den nicht löschgeschützten Speicherbereichen (25-27), in denen die zu dem ersten Teil gehörenden (n-m) Abbilder gespeichert sind, um Speicherbereiche auf Festplatte (20) handelt.

10. Verfahren nach einem der Ansprüche 4 bis 9, **dadurch gekennzeichnet, dass** es sich bei den löschgeschützten Speicherbereichen (23, 3), in denen die zu dem zweiten Teil gehörenden m Abbilder gespeichert sind, um Speicherbereiche (23, 3) einer Festplatte (20) oder eines Schnellspeichers (10) handelt.

11. Verfahren nach einem der Ansprüche 1 bis 10, **dadurch gekennzeichnet, dass** vor dem Starten eines der Abbilder zwecks Ausführung verifiziert wird (109), dass dieses Abbild nicht in einem komprimierten Modus gespeichert ist, wobei das Abbild dekomprimiert wird (110), bevor es geladen und ausgeführt (103, 104) wird, wenn sich herausstellt, dass es komprimiert ist.

12. Verfahren nach einem der Ansprüche 4 bis 7, **dadurch gekennzeichnet, dass** in einem Schritt vor der Durchführung des Verfahrens eine ganzzahlige Anzahl n von Abbildern geladen wird, die in ein erstes Teil mit (n-m) Abbildern, die in nicht löschgeschützten Speicherbereiche (25-27) gespeichert sind, und in ein zweites Teil mit m Abbildern, die in löschgeschützten Speicherbereichen (3, 23) gespeichert sind, eingeteilt werden, und dass die Referenztabelle (16) für die n Abbilder gebildet wird.

13. Digitaler Fernsehdecoder oder -empfänger, welcher das Verfahren nach einem der vorhergehenden Ansprüche implementiert.
